# EUROPÄISCHE PATENTSCHRIFT

(11) **EP 0 894 322 B1**
(45) Veröffentlichungstag und Bekanntmachung des Hinweises auf die Patenterteilung: **06.12.2000**
(21) Anmeldenummer: 97919364.6
(22) Anmeldetag: 16.04.1997
(51) Int. Cl.: G11B 27/02, G11B 20/00

(54) **VERFAHREN UND VORRICHTUNG ZUM AUFZEICHNEN/VERARBEITEN VON AUTHENTISCHEN BILD- UND/ODER TONDATEN**
METHOD AND DEVICE FOR RECORDING/ PROCESSING OF AUTHENTIC IMAGE AND/OR AUDIO DATA
PROCEDE ET DISPOSITIF POUR ENREGISTRER/TRAITER DES DONNEES VIDEO ET/OU AUDIO AUTHENTIQUES

(30) Priorität: 18.04.1996 DE 19615301
(43) Veröffentlichungstag der Anmeldung: 03.02.1999
(73) Patentinhaber: Deutsche Telekom AG, 53113 Bonn (DE)
(72) Erfinder: HUBER, Klaus, D-64283 Darmstadt (DE); SCHEERHORN, Alfred, D-64293 Darmstadt (DE)
(74) Vertreter: Kampfenkel, Klaus, Dipl.-Ing.DE)
(86) Internationale Anmeldenummer: EP9701891
(87) Internationale Veröffentlichungsnummer: WO9740496

(56) Entgegenhaltungen:
- WO-A-82/02111
- WO-A-86/00745
- US-A- 4 706 293
- US-A- 5 400 185

## Beschreibung

Die Erfindung betrifft eine Vorrichtung zum Aufzeichnen/Verarbeiten von authentischen Bild- und/oder Tondaten nach dem Oberbegriff des Anspruchs 1.

Analoge Aufnahme- und Überträgungsverfahren jedweder Art werden heute mehr und mehr durch digitale Verfahren ersetzt. Durch die Entwicklung der modernen Informationstechnik und der Digitalisierung wird die Manipulation der digitalen Daten immer einfacher. So können schon heute mit relativ geringem finanziellen und technischen Aufwand digital vorliegende Bildatten bzw. allgemeine optische Informationen leicht mit entsprechender Soft- und Hardware gefälscht werden. Beispiele dieser Fälschungen gehen vom einfachen Kopieren von Daten, sowohl Bild- als auch Tondaten, Filmen oder deren Ausschnitte bis hin zur synthetischen Nachahmung von Fotografien oder Bildfolgen selbst für Experten. Für Experten ist es sehr schwer festzustellen, ob vorliegende Fotografien oder Filme authentisch sind, das heißt Abbild tatsächlich aufgetretener optischer Realitäten. Für bestimmtes vorgegebenes Tonmaterial trifft dieser Sachverhalt ebenfalls zu. Dies ist insbesondere dann wichtig, wenn zu Filmen oder Bildfolgen entsprechende Tonaufzeichnungen gemacht werden, wie bei Videoaufzeichnungen und Tonfilmaufzeichnungen allgemein üblich. Als Beispiel denke man sich Bildaufnahmen eines Unfallvorgangs, bei dem zum Beispiel die Ampelfarben manipuliert worden sind. Bei Aufnahmen eines Einbruchs könnte man auch die Gesichter der Täter austauschen und eventuell die dazu angeforderten Tonaufzeichnungen fälschen. Es sind bereits Verfahren zur Berechnung digitaler Signaturen unter anderem aus Kapitel 5, Stallings W., Network and Internetwork Security, IEEE Press 1995, ISBN 0-02-415433-0 und aus Kapitel 6, Stinson D.R., Cryptography: Theory and Practice, CRC Press 1995, ISBN 0-8493-3521-0 bekannt, die für eine gesicherte Informations- bzw. Datenübertragung verwendet werden.

Aus der US-A- 5 499 294 ist eine digitale Kamera bekannt, die mit einem Prozessor zum Authentifizieren von Bildern ausgestattet ist, die aus einer von der digitalen Kamera aufgenommenen Bilddatei gewonnen werden. Die am Ausgang der digitalen Kamera erzeugte Bilddatei wird dem Prozessor zugeführt, der anschließend über diese Bilddatei eine digitale Signatur berechnet. Sowohl die Bilddatei als auch die digitale Signatur werden beispielsweise in einer Speichereinrichtung zur weiteren Verarbietung abgelegt.

In Zukunft wird die Synthese originalgetreuer Fälschungen von Bild- und Tondaten immer preiswerter und einfacher in der Handhabung. Die Originalität/Authentizität vorliegender digitaler Daten, insbesondere Bilddaten wird auf technischem Wege nicht mehr feststallbar sein, so daß Fälschungen bei den bisherigen Bild- oder Tonaufzeichnungen oder Kombinationen davon, leichter möglich werden. Durch eine Foto- oder Film- bzw. Videokamera werden Bilder, das heißt optische Signale, in analoge, elektrische Signale umgeformt, wobei letztere mittels eines Analog-Digital-Wandlers in digitale elektrische Signale transformiert werden, die dann gegebenenfalls aufgezeichnet werden. Der bisherige Lösungsansatz, die digitalen Daten mit einer digitalen Signatur zu unterschreiben, ist nicht hinreichend. Die digitalen Daten können zuvor gefälscht und erst danach signiert werden. Dieser Sachverhalt trifft auch für Tonaufzeichnungen zu.

Das zugrundeliegende Problem besteht darin, daß Bild- oder Tondaten bzw. deren Kombination in einer Art und Weise aufgezeichnet werden müssen, die sicherstellt, daß die Daten tatsächlich Abbild optischer Realitäten, zum Beispiel eines Einbruchs, und eventuell der zugehörigen Tondaten sind, das heißt nicht in irgendeiner Form manipuliert oder synthetisch erzeugt worden sind.

Der Erfindung liegt deshalb die Aufgabe zugrunde, eine Vorrichtung zu schaffen, die eine authentische und integre Aufzeichnung/Verarbeitung von Bild- bzw. Audiodaten und eventuell dazugehörigen Tondaten, und deren fälschungssichere Speicherung und Wiedergabe vom Datenträger gewährleisten, so daß sichergestellt ist, daß die aufgezeichneten Daten nicht in irgendeiner Form manipuliert oder synthetisch erzeugt worden sind.

Dieses Problem wird durch die Merkmale des Anspruchs 1 gelöst.

Weitere Merkmale bzw. Verbesserungen und/oder Ausgestaltungen der Erfindung sind in den restlichen Ansprüchen beschrieben.

Durch die Vorrichtung wird erreicht, daß die Prozesse der Umwandlung der Bilder, das heißt optische Signale in analoge elektrische Signale einer Foto-, Film- oder Videokamera, die Umwandlung der analogen elektrischen Signale in digitale elektrische Signale mit Hilfe von Analog-Digital-Wandlern und die Berechnung einer digitalen Signatur über die digitalen Daten miteinander gekoppelt werden, so daß eine Trennung dieser Prozesse nicht ohne nachträglich erkennbare Manipulationen an der Vorrichtung möglich ist. Die Kopplung der Prozesse erfolgt in der Vorrichtung derart, daß eine Trennung nicht ohne nachträglich erkennbare Manipulationen möglich ist. Diese Kopplung kann physikalisch in der Vorrichtung derart erfolgen, daß die angegebenen Prozesse bzw. Prozeßschritte nur mit nachträglich feststellbarer Manipulation oder Zerstörung der Vorrichtung durch Unbefugte voneinander getrennt werden können und zwar deshalb, weil alle an den Prozessen beteiligten Bauteile bzw. Schaltungen in der gesamten Vorrichtung eingegossen sind oder durch Versiegelung der Vorrichtung geschützt sind.

Die Erfindung wird im folgenden anhand eines in der Zeichnung dargestellten Ausführungsbeispiels näher beschrieben.

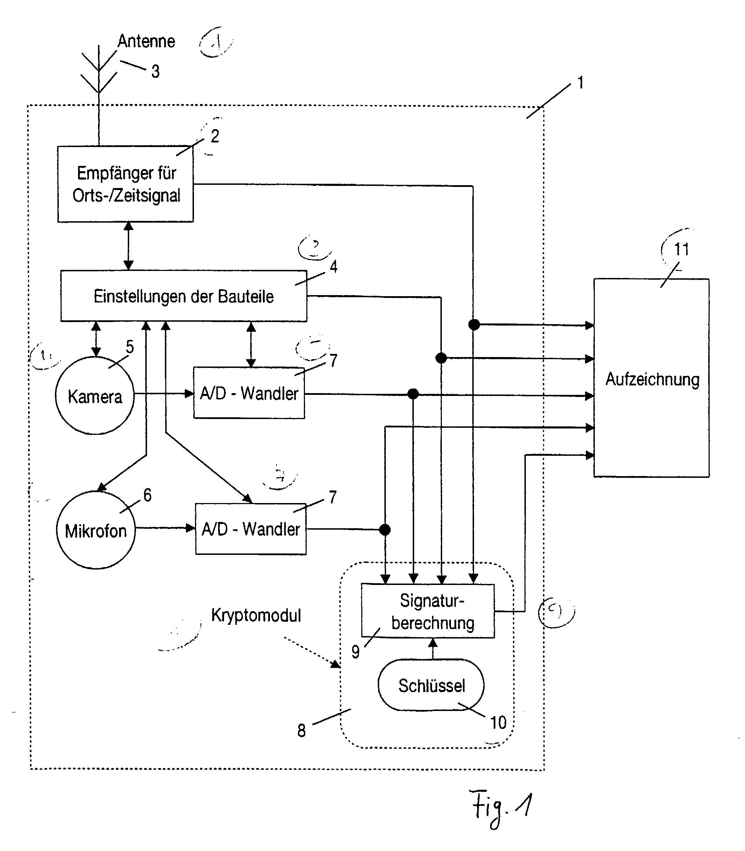

Es werden folgende Bezugszeichen in der Beschreibung, der Fig. 1, in den Patentansprüchen und der Zusammenfassung verwendet:
- 1: Schaltung bzw. Vorrichtung zur geschützten Bild-/Tondatenaufzeichnung
- 2: Empfänger für Orts-/Zeitsignal
- 3: Antenne
- 4: Schaltung bzw. Speicher zur Kennzeichnung der Einstellung der Bauteile
- 5: Kamera
- 6: Mikrofon
- 7: A/D-Wandler
- 8: Kryptomodul
- 9: Signaturberechnung
- 10: Schlüssel
- 11: Aufzeichnung

Wie bereits erwähnt, muß zum Erreichen einer authentischen Bildaufzeichnung der gesamte Prozeß von den optischen Signalen bis hin zu den aufgezeichneten digitalen Daten nachvollziehbar, unwiderrufbar und beweisbar gestaltet werden.

Dies wird dadurch erreicht, daß die Prozesse der
- Umwandlung der Bilder, das heißt der optischen Signale in analoge elektrische Signale,
- Umwandlung der analogen elektrischen Signale in digitale elektrische Signale durch Analog-Digital-Wandler und
- die Berechnung einer digitalen Signatur über die digitalen Daten in einer Vorrichtung 1 nach Fig. 1 miteinander so gekoppelt werden, daß eine Trennung dieser Prozesse nicht ohne nachträglich erkennbare Manipulation an der Vorrichtung möglich ist. Eine solche Kopplung der Prozesse kann beispielsweise physikalisch erfolgen, zum Beispiel durch Eingießen oder Verschließen der gesamten Vorrichtung oder durch Versiegelung der Vorrichtung.

Außerdem ist dann eine Modifikation der Vorrichtung zur Aufzeichnung authentischer Bilddaten erforderlich, wenn zum Beispiel die entsprechenden Tondaten mit aufgezeichnet werden sollen, wie dies zum Beispiel bei Tonfilmen der Fall ist. Die digitale Signatur wird dann erfindungsgemäß über alle audiovisuellen Daten gebildet, das heißt über die Daten, die von optischen Signalen stammen, und die Daten, die von akustischen Signalen stammen. Die Prozesse der Umwandlung der akustischen Signale in analoge elektrische Signale und deren Umwandlung in digitale elektrische Signale müssen dabei in der Vorrichtung 1 so mit den zuvor genannten Prozessen der Vorrichtung gekoppelt werden, daß eine Trennung dieser Prozesse nicht ohne nachträglich erkennbare Manipulation an der Vorrichtung möglich ist. Der Authentizitätsnachweis der digitalen Daten, das heißt der Nachweis, daß die digitalen Daten Abbild tatsächlich aufgetretener optischer bzw. audiovisueller Realitäten sind, erfolgt durch das Überprüfen der digitalen Signatur zu den vorliegenden digitalen Daten und durch das Überprüfen der Unversehrtheit der erfindungsgemäßen Vorrichtung.

Sind Manipulationen an der Vorrichtung zu erkennen, die vermuten lassen, daß die oben beschriebenen Prozesse getrennt wurden, oder paßt die digitale Signatur nicht zu den vorliegenden Daten, so werden die Daten als nicht authentisch abgelehnt.

Ist die Signatur jedoch korrekt, und die Vorrichtung 1 unversehrt, dann ist dadurch bewiesen, daß die vorliegenden aufgezeichneten Daten tatsächlich ein Abbild der optischen bzw. audiovisuellen Signale sind, die mit Hilfe der Vorrichtung 1 aufgenommen und gespeichert worden sind.

In diesem Zusammenhang ist es erforderlich, daß die Vorrichtung personalisiert ist. Das heißt, die digitale Signaturberechnung über die Daten erfolgt mit Hilfe eines geheimen Schlüssels 10, der
1. sicher in der Vorrichtung gespeichert ist und von außerhalb der Vorrichtung nicht in Erfahrung gebracht werden kann, ohne nachträglich erkennbare Manipulationen an der Vorrichtung 1, und
2. jeder Vorrichtung eindeutig zugeordnet ist, das heißt es gibt keine zwei Vorrichtungen mit gleichem geheimen Schlüssel 10.

Das Einbringen des geheimen Schlüssels 10 in die Vorrichtung 1 hat auf eine vertrauenswürdige, kontrollierte Weise zu geschehen.

Wäre die unter 1. genannte Bedingung nicht gegeben, das heißt der geheime Schlüssel 10 der Vorrichtung 1 ohne nachträglich erkennbare Manipulation der Vorrichtung 1 manipulierbar, so könnte nach dem Eruieren des geheimen Schlüssels 10 der Vorrichtung 1 die digitale Signatur zu beliebigen vorliegenden Daten berechnet werden. Diese Daten würden zusammen mit der unversehrten Vorrichtung 1 dann fälschlicherweise als authentisch anerkannt. Die unter 1. angegebene Bedingung ist deshalb unbedingt erforderlich.

Wäre die unter 2. angegebene Bedingung nicht gegeben, das heißt mehrere Vorrichtungen mit dem gleichen geheimen Schlüssel 10 würden existieren, dann könnten die Daten nur dann als authentisch anerkannt werden, wenn die Unversehrtheit aller dieser Vorrichtungen gewährleistet ist. Ist jeder Vorrichtung eindeutig jedoch ein Schlüssel 10 zugeordnet, so genügt die Unversehrtheit der entsprechenden Vorrichtung, um die mit dem ihr zugeordneten geheimen Schlüssel 10 unterschriebenen Daten als authentisch anerkennen zu können. Die Bedingung 2 ist deshalb sinnvoll, jedoch nicht unbedingt erforderlich.

In die Daten, die durch dieses Verfahren als authentisch nachgewiesen werden, können bzw. sollten neben den Daten, die von optischen bzw. audiovisuellen Signalen stammen, des weiteren Daten mit einfließen, die die Vorrichtung 1 bzw. die Einstellungen der Vorrichtung 1 identifizieren, beispielsweise
- Kamerakennzeichnung/-typ,
- bei audiovisuellen Aufzeichnungen zusätzlich Mikrofonkennung oder Typ,
- technische Aufnahmedaten, wie Blendeneinstellung oder Bildauflösung,
- bei audiovisuellen Aufzeichnungen zusätzlich Mikrofoncharakteristika,
- Typ des A/D-Wandlers bzw. der -Wandler,
- Abtastrate des A/D-Wandlers bzw. der -Wandler u.s.w..

Falls ein vertrauenswürdiges Zeitsignal und/oder Ortssignal vorhanden ist, kann die Vorrichtung 1 zusätzlich mit einem Empfänger 2 für diese Signale ausgestattet werden. Das Zeit- und/oder Ortssignal wird dann mit aufgezeichnet und die digitale Signatur wird über die Daten, die von optischen Signalen stammen, sowie über das Zeit- und/oder Ortssignal und gegebenenfalls die zuvor genannten Einstellungen bzw. Kennungen der Vorrichtung 1 bzw. ihrer Bauteile 4 gebildet. Dadurch wird eine authentische Aufnahme von Bilddaten bzw. audiovisuellen Daten, zusammen mit authentischen Informationen über den Ort, die Zeit sowie die Einstellungen der Aufnahmevorrichtung und die Aufnahmevorrichtung selbst erreicht bzw. gewährleistet.

Das Einbringen des geheimen Schlüssels 10 in die Vorrichtung 1 auf eine vertrauenswürdige, kontrollierte Art und Weise erfolgt dadurch, daß Chipkarten bzw. Plug-In Module, in die bei einer vertrauenswürdigen Instanz der Schlüssel 10 programmiert wurde, verwendet werden. Des weiteren ist auf der Chipkarte bzw. im Plug-In Modul gewöhnlich auch das Verfahren zur Berechnung der digitalen Signatur implementiert. Dies hat den Vorteil, daß der Schlüssel 10 die Chipkarte bzw. das Plug-In Modul 8 nie verläßt und in der Chipkarte bzw. dem Plug-In Modul nicht von außen abfragbar, das heißt sicher gespeichert ist.

Ein prinzipieller Aufbau einer Vorrichtung 1, die in Form eines Plug-In-Moduls oder einer speziellen Chipkarte oder ähnlichem realisiert werden kann, ist in Fig. 1 dargestellt. Diese Schaltung 1 besteht insbesondere aus Schaltungen bzw. Speichern mit äquivalenten Daten zur Kennzeichnung der Einstellung der Bauteile 4, der Charakteristika einer Kamera 5 und gegebenenfalls eines Mikrofons 6, dazugehörigen A/D-Wandlern 7 und aus einem Kryptomodul 8 mit Signaturberechnung 9 und Schlüssel 10. Außerdem kann gegebenenfalls ein Empfänger für Orts-/Zeitsignal 2 mit entsprechender Antenne 3 integriert sein. Dadurch wird die Sicherheit bzw. Authentizität der Aufzeichnung 11 noch erhöht. Das Gerät für die Aufzeichnungen 11 ist deshalb über entsprechende Leitungen mit dem Kryptomodul 8, den A/D-Wandlern 7, der Schaltung 4 und gegebenenfalls mit dem Empfänger 2 für das Orts-/Zeitsignal verbunden. In die Signaturberechnung gehen die Daten bzw. die Informationen, wie bereits beschrieben, aller vorhandenen Größen ein, weshalb die Signaturberechnungsschaltung 9 mit den A/D-Wandlern 7, der Kamera 5 bzw. dem Mikrofon 6 indirekt, der Schaltung 4 und dem Empfänger 2 verbunden ist.

## Patentansprüche

1. Vorrichtung zum Aufzeichen und/oder Verarbeiten von authentischen optischen Signalen umfassend:
eine erste Einrichtung (5) zur Umwandlung von wenigstens ein Bild darstellenden optischen Signalen in analoge elektrische Bildsignale,
eine zweite Einrichtung (7) zur Umwandlung der analogen elektrischen Bildsignale in digitale Bilddaten,
eine einen geheimen, kryptografischen Schlüssel (10) enthaltende Einrichtung (8) zur Berechnung einer digitalen Signatur über die digitalen Bilddaten und
eine Einrichtung zum Aufzeichnen (11) und/oder Verarbeiten der digitalen Bilddaten zusammen mit der dazugehörenden digitalen Signatur
dadurch gekennzeichnet, daß
zur Wahrung der Integrität der digitalen Bilddaten die erste (5) und zweite Einrichtung (7) sowie die Einrichtung (8) zur Berechnung einer digitalen Signatur in einer von außen nicht ohne erkennbare Manipulation öffenbare Einrichtung (1) angeordnet ist.

2. Vorrichtung nach Anspruch 1,
gekennzeichnet durch
eine dritte Einrichtung (6) zur Umwandlung von den optischen Signalen zugeordneten akustische Signalen in analoge elektrische Tonsignale sowie
eine vierte Einrichtung (7) zur Umwandlung der analogen elektrischen Tonsignale in digitale Tondaten, die zur Wahrung der Integrität der digitalen Tondaten in der von außen nicht ohne erkennbare Manipulation öffenbaren Einrichtung (1) angeordnet sind,
wobei die Einrichtung (8) zur Berechnung einer digitalen Signatur auch zur Berechnung einer digitalen Signatur über die digitalen Tondaten und die Einrichtung zum Aufzeichnen (11) und/oder Verarbeiten der digitalen Bilddaten zusammen mit der dazugehörenden digitalen Signatur auch zum Aufzeichnen und/oder Verarbeiten der digitalen Tondaten mit der dazugehörenden digitalen Signatur ausgebildet ist.

3. Vorrichtung nach Anspruch 1 oder 2,
dadurch gekennzeichnet, daß
die von außen nicht ohne erkennbare Manipulation öffenbare Einrichtung (11) versiegelt ist, oder ein Glas-, Kunststoff- oder Metallkörper ist.

## Claims

1. A device for recording and/or processing authentic optical signals comprising:
a first means (5) for converting optical signals representing at least one image into analog electrical image signals,
a second device (7) for converting the analog electrical image signals into digital image data,
a means (8) containing a secret cryptographic key (10) for calculating a digital signature via the digital image data and
a means for recording (11) and/or processing the digital image data together with the associated digital signature
characterised in that
in order to maintain the integrity of the digital image data the first means (5), the second means (7) and the means (8) for calculating a digital signature are disposed in a means (1) which cannot be opened from the exterior without recognisable manipulation.

2. A device according to claim 1, characterised by
a third means (6) for converting the acoustic signals associated with the optical signals into analog electrical audio signals and
a fourth means (7) for converting the analog electrical audio signals into digital audio signals which, in order to maintain the integrity of the digital audio signals, are disposed in the means (1) which cannot be opened from the exterior without detectable manipulation,
wherein the means (8) for calculating a digital signature is also designed to calculate a digital signature via the digital audio data and the means for recording (11) and/or processing the digital image data together with the associated digital signature are also designed for recording and/or processing the digital audio data with the associated digital signature.

3. A device according to claim 1 or 2,
characterised in that the means (11) which cannot be opened from the exterior without recognisable manipulation is sealed or is a glass or plastic or metal body.

## Revendications

1. Appareil pour enregistrer et/ou traiter des signaux optiques authentiques comprenant :
un premier dispositif (5) pour transformer des signaux optiques représentant au moins une image en signaux vidéo électriques analogiques,
un deuxième dispositif (7) pour transformer les signaux vidéo électriques analogiques en données vidéo numériques,
un dispositif (8) contenant une clé (10) secrète cryptographique pour calculer une signature numérique sur les données vidéo numériques, et
un dispositif (11) pour enregistrer et/ou traiter les données vidéo numériques conjointement à la signature numérique associée,
caractérisé en ce que,
pour sauvegarder l'intégrité des données vidéo numériques, le premier dispositif (5) et le deuxième dispositif (7) ainsi que le dispositif (8) pour le calcul d'une signature numérique sont agencés dans un dispositif (1) qui ne peut pas être ouvert de l'extérieur sans manipulation détectable.

2. Appareil selon la revendication 1,
caractérisé par
un troisième dispositif (6) pour transformer des signaux acoustiques associés aux signaux optiques en signaux audio électriques analogiques, et
un quatrième dispositif (7) pour transformer les signaux audio électriques analogiques en signaux audio numériques,
lesquels dispositifs, pour sauvegarder l'intégrité des données audio numériques, sont agencés dans le dispositif (1) qui ne peut pas être ouvert de l'extérieur sans manipulation détectable,
le dispositif (8) pour le calcul d'une signature numérique étant aussi conçu pour calculer une signature numérique sur les données audio numériques et le dispositif (11) pour enregistrer et/ou traiter les données vidéo numériques conjointement à la signature numérique associée étant aussi conçu pour enregistrer et/ou traiter les données audio numériques conjointement à la signature numérique associée.

3. Appareil selon la revendication 1 ou 2,
caractérisé en ce que
le dispositif (11) qui ne peut pas être ouvert de l'extérieur sans manipulation détectable est scellé ou alors est un corps en verre, en matière plastique ou en métal.
